# EUROPEAN PATENT APPLICATION

(11) **EP 2 348 289 A2**
(43) Date of publication of application: **27.07.2011**
(21) Application number: 10397527.2
(22) Date of filing: 28.12.2010
(51) Int. Cl.: G01D 11/24, G12B 9/08

(54) **Connecting device for measuring instruments**

(30) Priority: 11.01.2010 FI 20105017
(71) Applicant: Satron Instruments Oy, 33900 Tampere (FI)
(72) Inventor: Ruosaari, Olli, 33560 Tampere (FI)
(74) Representative: Rahkonen, Erkki Juhani

(57) **Abstract**

The invention relates to connecting device comprising a selector member which is arranged to move in relation to a body and which rotates in relation to its rotational line at least to a first and to a second position, which first and second position comprise a measuring position for process measurements and a maintenance position. The connecting device also comprises a body of the connecting device and at least two measuring instrument apertures positioned in connection with the selector member.

## Description

### Field of the invention

The invention relates to a connecting device for measuring instruments.

### Background of the invention

In process industry various measurements are performed, in which the measuring instrument must be in direct or indirect contact with the process medium that is being measured. For this purpose special connecting devices for measuring instruments are used in the process industry, by means of which the measuring instrument can be positioned in the desired location in the process in connection with the process medium.

One known connecting device for measuring instruments is disclosed in US patent No. 4,628,732. In said publication the connecting device for measuring instruments comprises a selector member, which may have for example a cylindrical or spherical shape. Said selector member has two separate operating positions: a measuring position and a maintenance position. When the connecting device disclosed in the publication is in the measuring position, a measuring instrument aperture provided in the selector member of the connecting device is in contact with the process medium so that a measuring instrument placed in the measuring instrument aperture may measure a variable of the process. When the selector member of the connecting device is in the maintenance position, the connection between the process medium and the measuring instrument aperture in the selector member is, in turn, cut off. Thus, the connection between the measuring instrument placed in said measuring instrument aperture and the process is also cut off. The measuring instrument positioned in the measuring instrument aperture of the selector member can be maintained safely when the selector member is in the maintenance position.

However, there is a problem in the connecting device disclosed in the publication US 4,628,732. The measuring heads of the measuring instruments must be maintained, for example washed or calibrated occasionally. When the aim is to maintain a measuring instrument in connection with said connecting device, for example to clean or calibrate the measuring head of the measuring instrument, the process measurements of said measuring instrument must be stopped until said maintenance tasks have been completed. The interruption of measurements for the duration of the maintenance tasks is often undesirable. In prior art attempts have been made to eliminate this drawback for example by installing at least two connecting devices substantially in the same point in the process, wherein the measuring instruments placed in these connecting devices can be maintained alternately. However, it is often much more expensive than desired to install at least two connecting devices substantially in the same point in the process.

Thus, there is a need in the industry for a solution by means of which it would not be necessary to essentially stop the measurements for example for the duration of the maintenance of the measuring head of the measuring instrument. Advantageously, the problem would be solved in such a manner that it would not be necessary to position as many connecting devices in the process as in the solutions of prior art.

### Brief summary of the invention

The purpose of the present invention is to solve the above-described problem in order to substantially reduce the effects caused by the interruptions relating to the maintenance tasks or the like of the measuring instrument positioned in connection with the connecting device on the measurements made from the process. For this purpose, a new connecting device for measuring instruments is disclosed.

In the presented solution there are at least two measuring instrument apertures for measuring instruments in the connecting device. The connecting device typically comprises a body and a selector member which is arranged to move in relation to the body and which rotates in relation to its rotational line at least to a first and to a second position. The positions of the selector member typically comprise a measuring position for the measurements of the process and a maintenance position for maintenance tasks. The connecting device according to the invention also comprises at least two measuring instrument apertures, which are advantageously positioned at least partly in connection with the selector member.

According to an advantageous embodiment, the connecting device is constructed in such a manner that at least one measuring instrument aperture may be in the measuring position at the same time when at least one other measuring instrument aperture is in the maintenance position.

According to an advantageous embodiment, a shaft is formed in connection with the selector member, which is positioned substantially on the rotational line of the selector member. The selector member has advantageously a spherical, hemispherical or cylindrical shape.

According to an advantageous embodiment, the connecting device for measuring instruments comprises flushing channels in the body of the connecting device located at least partly in connection with the body of the connecting device. They are intended for cleaning the measuring head of the measuring instrument placed in the measuring instrument aperture for example when said measuring instrument aperture is in the maintenance position. According to an advantageous embodiment the flushing channel in the body comprises an inlet channel and an outlet channel for the flushing channel of the body. Thus, flushing medium is advantageously conveyed into the connecting device via the inlet channel and removed from the connecting device via the outlet channel. In the connecting device there are advantageously at least two inlet channels of the flushing channel of the body. In the connecting device there is advantageously at least one outlet channel of the flushing channel of the body.

According to an advantageous embodiment the connecting device for measuring instruments comprises at least one inner flushing channel of the connecting device, which is placed at least partly in the selector member of the connecting device. The inner flushing channel of the connecting device is advantageously positioned in such a manner that it is possible to convey flushing medium therethrough via the selector member of the connecting device to at least one measuring instrument aperture.

The connecting device for measuring instruments according to the invention is presented in claim 1. The dependent claims present some advantageous embodiments of the invention.

### Description of the drawings

In the following, the invention will be described in more detail with reference to the appended drawings, in which
- Figs. 1 a-b: show an exemplary embodiment of the connecting device for measuring instruments in its first position,
- Figs. 2a-b: show an exemplary embodiment of the connecting device for measuring instruments of Fig. 1 in its second position,
- Figs. 3a-b: show the connecting device for measuring instruments according to Figs 1 to 2 in such a situation where one of the measuring instruments have been removed from the measuring instrument aperture which is in the maintenance position,
- Figs. 4a-b: show an exemplary embodiment of the flushing channels of the connecting device of Fig. 3, and
- Figs 5-7: show some exemplary embodiments of the inner flushing channels of the connecting device.

### Detailed description of the invention

In this application for instance the terms "first part 9a of the inner flushing channel" and "second part 9b of the inner flushing channel" and "third part 9c of the inner flushing channel" are used. The term "first part 9a of the inner flushing channel" refers throughout the application to that part of the inner flushing channel of a connecting device for a measuring instruments which is the first one to be in contact with the selector member of the connecting device when flushing medium is conveyed along the inner flushing channels 9. The term "third part 9c of the inner flushing channel" refers throughout the application to that part of the inner flushing channel of a connecting device for measuring instruments that is positioned at least partly in the selector member and along which it is possible to convey flushing medium closer to the measuring instrument aperture of the selector member of the connecting device, preferably into the measuring instrument aperture. The term "second part 9b of the inner flushing channel" refers throughout the application to that part of the inner flushing channel of a connecting device for measuring instruments which is positioned between the first part 9a and the third part 9c of the inner flushing channel. Between said parts of the inner flushing channel there may also be other parts of the inner flushing channel. Thus, the second part of the inner flushing channel is advantageously, but not necessarily, in contact with the third part of the inner flushing channel. In some cases the first part 9a and the second part 9b of the inner flushing channel can be the one and the same shared channel part.

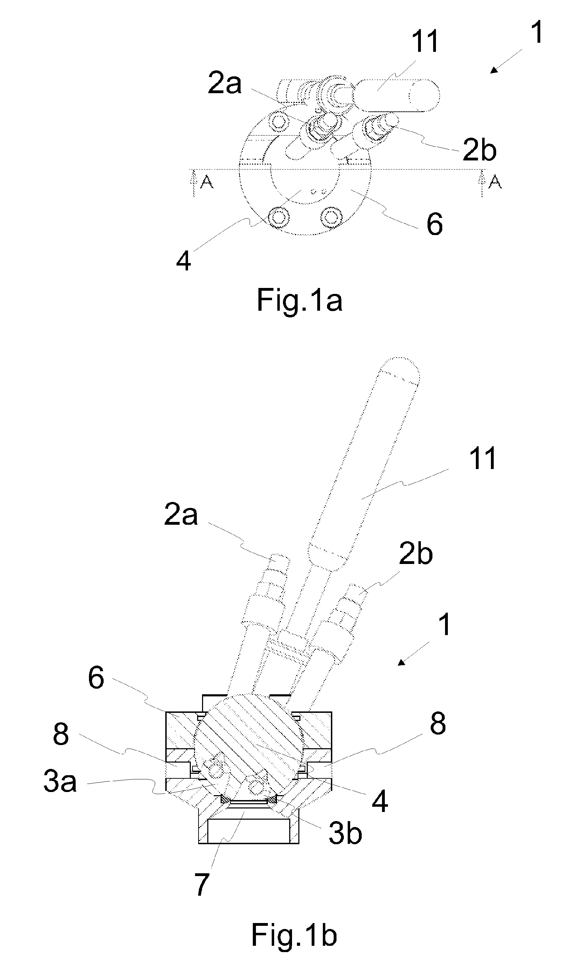

The different embodiments of the connecting device according to the invention are shown in Figs 1 to 7. The materials used as manufacturing materials of the connecting device are compatible with the process to be measured. In several embodiments it is advantageous to use for example a body made of stainless steel or plastic. The sealings used in the connecting device can be suitable prior art sealings, such as PTFE sealings.

Figs 1 to 7 show some exemplary solutions of the connecting device 1. The reference numerals in the Figures are used in the following way throughout the application: connecting device 1 for measuring instruments, measuring instrument aperture 3, first measuring instrument aperture 3a, second measuring instrument aperture 3b, measuring instrument 2, first measuring instrument 2a, second measuring instrument 2b, selector member 4, rotational line 5 of the selector member, body 6 of the connecting device, measuring aperture 7 in the body of the connecting device, locking arm 11 1 of the connecting device, flushing channels 8 in the body of the connecting device, comprising an inlet channel 8a for feeding flushing medium to the connecting device 1 and an outlet channel 8b for removing the flushing medium from the connecting device 1 and inner flushing channels 9 of the connecting device, comprising a first part 9a, a second part 9b and a third part 9c of the inner flushing channel.

The connecting device 1 comprises a body 6 of the connecting device which is provided with a measuring aperture 7 of the body of the connecting device for measurements made from the process. The connecting device 1 also contains at least a first measuring instrument aperture 3a and a second measuring instrument aperture 3b in which a measuring instrument 2 can be placed. Each measuring instrument 2 advantageously measures a desired variable of the process, such as for example acidity, temperature, conductivity, pressure, etc.

The connecting device 1 also comprises a selector member 4. The shape of the selector member 4 can be for example cylindrical, partly cylindrical, hemispherical, partly hemispherical, spherical or partly spherical. The selector member may also have another shape, in such a manner, however, that the basic idea of the invention prevails. Often the selector member 4 is preferably spherical in shape.

The selector member 4 is advantageously arranged to move with respect to the body 6 in such a manner that it has at least two operating positions, in other words at least a first and a second position. The selector member 4 may also have more than two operating positions, for example three or four operating positions. Especially when there are more than two measuring instrument apertures 3a, 3b, there are often also advantageously more than two operating positions. The measuring instrument apertures 3a, 3b are located at a distance from each other. The ratio of the number of the operating positions of the selector member 4 of the connecting device 1 to the number of measuring instrument apertures 3a, 3b is advantageously 1:1, 1:2, 1:3 or 1:4. According to an advantageous embodiment, the measuring instrument apertures 3a, 3b are located in parallel lines with respect to the change in the position of the selector member 4 caused by the operating positions. According to an advantageous embodiment, the number of the operating positions of the selector member of the connecting device is the same as the number of the measuring instrument apertures 3a, 3b.

The at least two operating positions of said selector member 4 comprise at least one such positioning of the measuring instrument apertures 3a, 3b that enables measurements from the process by means of a measuring instrument 2 placed in the first measuring instrument aperture 3a at the same time when at least one positioning of the second measuring instrument aperture 3b enables performing at least one maintenance task of another measuring instrument 2.

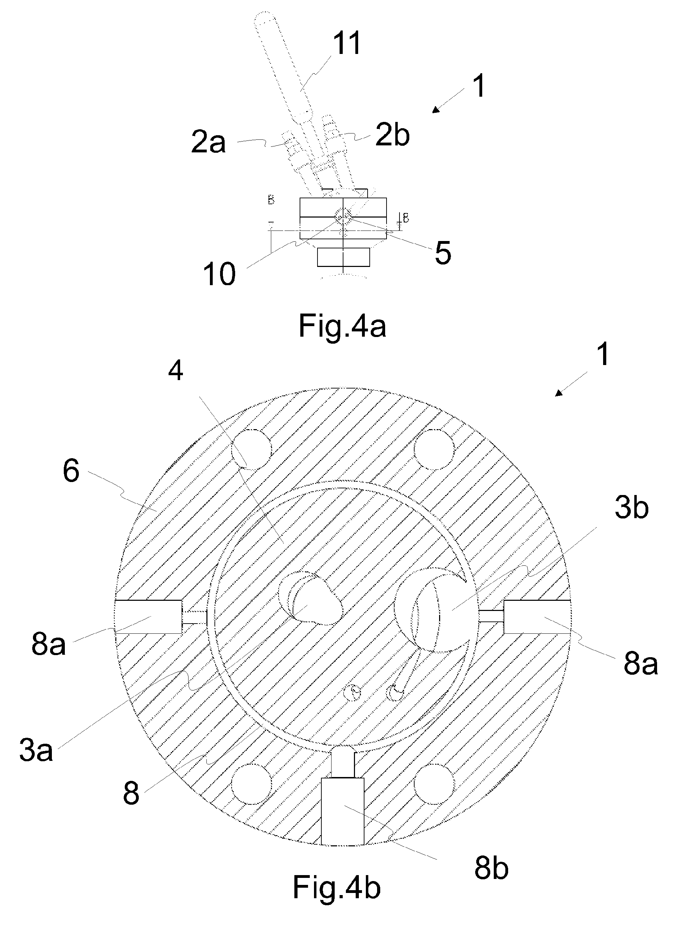

The selector member 4 is arranged to rotate into all its different operating positions in relation to its rotational line 5 (shown in Fig 4 in the middle of the axial line). Typically, the selector member 4 is provided with a shaft 10 so that the axial line is located substantially on the rotational line 5. The selector member 4 is advantageously fastened to the body from both ends of the shaft 10 so that the rotation around the rotational line 5 is possible. If the selector member has a cylindrical shape, the fastening is advantageously implemented through the ends of the cylinder, wherein the shaft 10 can be omitted in some embodiments. The movement of the selector member 4 is advantageously restricted to the above-mentioned operating positions and transfers between the different operating positions of the selector member 4. By means of suitable fastenings the selector member 4 remains in the desired location with respect to the body 6 and the movement of the selector member 4 in undesired directions, such as the longitudinal direction of the shaft, is substantially prevented. In addition to the fastenings, the movement path of the selector member is affected by a housing in the body 6 in which the selector member 4 is positioned.

The connecting device 1 also comprises at least two measuring instrument apertures 3a, 3b. These measuring instrument apertures 3a, 3b are located at least partly in the selector member 4. According to the same principle, it is possible to add for example three, four, five or six measuring instrument apertures in the connecting device. There may also be a larger number of measuring instrument apertures 3. When there are at least two measuring instrument apertures 3, preferably more than two, it may be possible to measure several properties from the process simultaneously and/or it may be possible to perform two parallel measurements with two measuring instruments 2 simultaneously. In some cases it may be desirable to perform parallel measurements for example because when parallel measurements are used, possible erroneous values measured by the measuring instrument can be more easily detected. If there are for example four measuring instrument apertures 3, the measuring instrument positioned therein may be used for measuring for example two different properties so that two other measuring instrument apertures may be in the maintenance position at the same time. Alternatively, for example one property may be measured with two parallel measuring instruments simultaneously so that two other measuring instrument apertures may be in the maintenance position at the same time.

The measuring instrument apertures 3 are arranged at a distance from each other. They may be positioned substantially in parallel in relation to each other. According to one exemplary embodiment it is possible to use the connecting device 1 in such a manner that a measuring instrument 2 is placed only in some of the measuring instrument apertures. However, if measuring instruments 2 have been positioned in at least two measuring instrument apertures 3, it is often possible to operate without interrupting the measurements also in this exemplary case. In case only one measuring instrument 2 is used, said measuring instrument 2 may be positioned in any of the measuring instrument apertures 3a, 3b. However, the measurements are then naturally always interrupted when said measuring instrument 2 is subjected to maintenance.

The maintenance of the connecting device 1 is especially safe, if the selector member 4 is locked for the duration of the maintenance. For this purpose the connecting device may advantageously contain a suitable solution, such as a special locking arm 11. According to an advantageous embodiment, the locking arm 11 functions for example in such a manner that the locking of the connecting device is released by turning a handle and so that the act of changing of the operating positions takes place by lifting a special locking sleeve. Thus, the locking arm 11 1 is not necessarily a locking member as such, but preferably it is a member by means of which the function of the actual locking member can be controlled manually. The locking of the connecting device means that the operating position of the connecting device 1 cannot be changed during said locking. Thus, the connecting device 1 can be locked in its desired operating position manually for example for the duration of maintenance. Thus, it may be advantageously possible to release the manually operated locking arm 11 so that it is in its operating location only when the aim is to lock the connecting device 1 to a desired position manually.

The connecting device 1 is fastened to the interface of the process to be measured for example from the outer surface of the connecting device, so-called fastening surface. This fastening of the connecting device 1 to the interface of the process, such as a process tube or container is performed by means of a method of prior art, for example by welding and/or using suitable fastening members.

Figs 1a to 1b show an advantageous embodiment of the connecting device 1. Fig. 1b shows a cross-sectional view of the line A-A shown in Fig. 1 a. Figs 1 a to 1 b show a connecting device 1, a first measuring instrument aperture 3a, a second measuring instrument aperture 3b, a first measuring instrument 2a, a second measuring instrument 2b, a selector member 4, the body 6 of the connecting device, a measuring aperture 7 in the body of the connecting device, a locking arm 11 of the connecting device and flushing channels 8 in the body of the connecting device.

Figs. 1 a to 1 b show a connecting device 1 provided with two measuring instrument apertures. The figures also show a locking arm 11, the adding of which to the connecting device may be advantageous in some cases, for example when the aim is to use the connecting device manually. In the Figures 1, the selector member 4 of the connecting device is in the first position. When the selector member 4 of the connecting device provided with two measuring instrument apertures is in the first position, the second measuring instrument aperture 3b located in the selector member 4 is connected to the measuring aperture 7 in the body 6 of the connecting device 1. Thus, the second measuring instrument 2b placed advantageously in the second measuring instrument aperture 3b is advantageously connected to the process to be measured so that the measuring head of said second measuring instrument 2b can perform measurements from the process.

When the connecting device 1 is in said first position, the first measuring instrument aperture 3a is in the maintenance position outside the process. Thus, the measuring head, such as a sensor, of the first measuring instrument 2a placed in the first measuring instrument aperture 3a is located outside the process in accordance with Fig. 1. Thus, the measuring head of said first measuring instrument 2a can be maintained, for example calibrated, washed or repaired so that the second measuring instrument 2 possibly placed in connection with said connecting device 1 and advantageously coupled to the process can still continue the measurements made from the process.

If there are more than two measuring instrument apertures 3, for example three or four, it is, in turn, possible to proceed in such a manner that at least one measuring instrument aperture 3 is in the measuring position, wherein the measuring instrument 2 advantageously placed therein may perform measurements from the process at the same time when at least one other measuring instrument aperture 3 is in the maintenance position, wherein it is safe to maintain the measuring instrument 2 placed in said measuring instrument aperture 3 which is in the maintenance position.

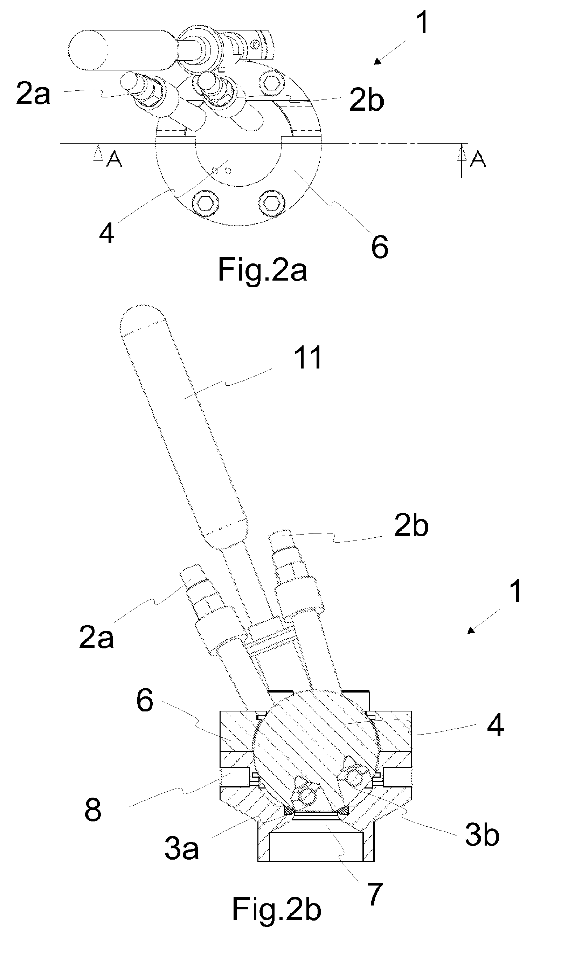

Figures 2a to 2b show an exemplary embodiment of the connecting device according to Fig. 1. Fig. 2b shows the cross-sectional line A-A of Fig. 2a. In Figs 2a to 2b the selector member 4 of the connecting device 1 is in the second position. The figure shows a connecting device 1, a first measuring instrument aperture 3a, a second measuring instrument aperture 3b, a first measuring instrument 2a, a second measuring instrument 2b, a selector member 4, the body of the connecting device 6, a measuring aperture 7 in the body of the connecting device, a locking arm 11 1 of the connecting device and flushing channels 8 in the body of the connecting device.

When the selector member 4 of the connecting device 1 is in the second position, the first measuring instrument aperture 3a is in the measuring position. Thus, the measuring head of the first measuring instrument 2a advantageously placed in the first measuring instrument aperture 3a can perform measurements from the process. In other words, the first measuring instrument aperture 3a located in the selector member 4 is in contact with the measuring aperture 7 located in the body of the connecting device 1, wherein the first measuring instrument 2a placed in the first measuring instrument aperture 3a is connected to the process to be measured.

In said second position, in turn, the second measuring instrument aperture 3b of the connecting device 1 is advantageously in the maintenance position. Thus, the measuring head of the second measuring instrument 2b placed advantageously in the second measuring instrument aperture 3b is located outside the process. In said maintenance position it is possible to maintain the second measuring instrument 2b placed in said second measuring instrument aperture 3b for example without interrupting the measurements from the process performed by another measuring instrument placed in the first measuring instrument aperture 3a because of said maintenance.

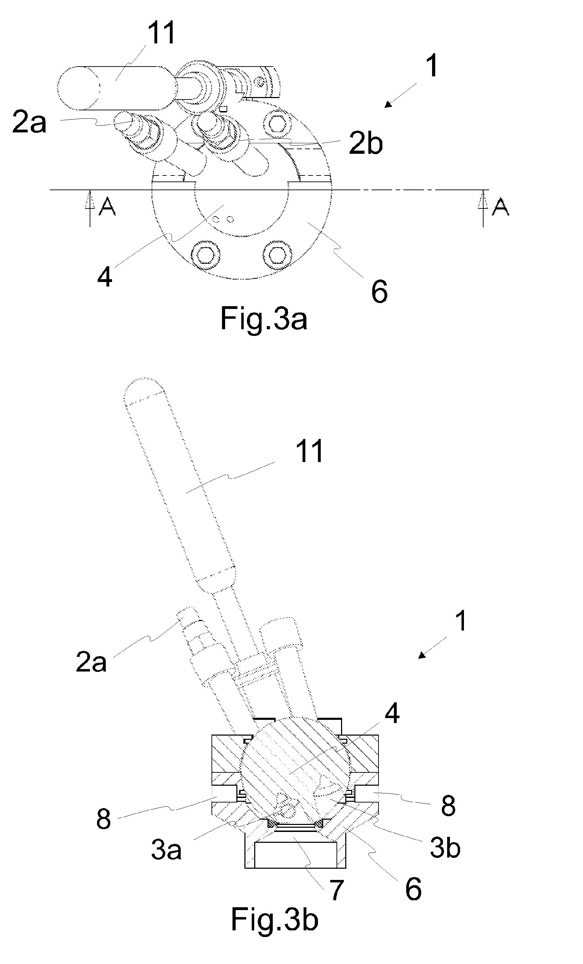

Figs 3a to 3b show an example of the connecting device 1 according to Figs 1 and 2 in a situation where one of the measuring instruments 2 has been removed from the measuring instrument aperture 3 which is in the maintenance position. Fig. 3b shows the cross-sectional line A-A of Fig. 3a. The Figures show a connecting device 1, a first measuring instrument aperture 3a, a second measuring instrument aperture 3b, a first measuring instrument 2a, a selector member 4, the body of the connecting device 6, a measuring aperture 7 in the body of the connecting device, a locking arm 11 1 of the connecting device and flushing channels 8 in the body of the connecting device.

In the Figures 3 the connecting device is shown in the second position. Thus, the first measuring instrument aperture 3a is in the measuring position and the second measuring instrument aperture 3a is in the maintenance position. The measuring head of the first measuring instrument 2a placed in the first measuring instrument aperture 3a which is in the measuring position can perform measurements in the process at the same time when the second measuring instrument aperture 3b is in the maintenance position.

The need to remove the measuring instrument may occur for example because of the maintenance tasks or replacement of the measuring instrument 2. There may be a measuring instrument 2 in the measuring instrument aperture 3 which is in the maintenance position, or the measuring instrument 2 may be removed from said measuring instrument aperture without affecting the measurements performed from the process, because the measuring instrument 2 located in the measuring instrument aperture 3 which is in the maintenance position does not perform measurements from the process. Because in addition to this measuring instrument aperture 3 which is in the maintenance position, at least one measuring instrument aperture 3 of the connecting device 1 is advantageously arranged in the measuring position, it is possible to continue the measurements from the process, if there is a measuring instrument 2 performing measurements in said measuring instrument aperture 3 which is in the measuring position.

Similarly, it is always possible to remove the measuring instrument 2 from any measuring instrument aperture 3 when said measuring instrument aperture 3 is in the maintenance position. In other words, when the measuring instrument aperture 3 is turned into the maintenance position, it is possible to remove the measuring instrument 2 placed in said measuring instrument aperture 3 for example for maintenance. This removal of the measuring instrument 2 from the measuring instrument aperture 3 which is in the maintenance position does not risk the measurements of the measuring instrument 2 in the measuring instrument aperture 3 which is in the measuring position. Each measuring instrument 2 may be removed from its measuring instrument aperture 3 for as long as said measuring instrument aperture 3 is turned to a maintenance position without affecting the success of the measurements.

Figures 4a to 4b show an exemplary embodiment of the flushing channels in the body 6 of the above-presented connecting device 1, which can be used for example in the connecting devices according to Figs. 1 to 3. Fig. 4b shows the cross-sectional line B-B of Fig. 4a. The figures show a connecting device 1, a first measuring instrument aperture 3a, a second measuring instrument aperture 3b, a selector member 4, the body of the connecting device 6, the rotational line 5 of the connecting device and the flushing channels 8 in the body of the connecting device, including the inlet channels 8a and outlet channel 8b for the flushing medium.

According to an advantageous embodiment, the connecting device 1 is equipped with flushing channels 8 in the body of the connecting device 1. By means of the flushing channels 8 in the body it is possible to clean the measuring head of the measuring instrument 2 placed in the measuring instrument aperture 3 (in Fig. 4 the measuring instrument aperture 3b) which is in the maintenance position without having to remove the measuring instrument 2 from the connecting device 1. It is advantageous to clean the measuring head of the measuring instrument 2 when said measuring instrument is not connected to the process, because then the flushing medium dispensed to the measuring head does not typically affect the measurements made from the process.

The flushing channels 8 in the body 6 of the connecting device 1 are advantageously placed in the body 6 of the connecting device 1 in such a manner that it is possible to use said flushing channels 8 to clean the measuring head of each measuring instrument 2 placed in the measuring instrument aperture 3 when the measuring instrument aperture 3 in question is in the maintenance position. This is implemented for example in such a manner that the measuring head of the first measuring instrument 2a placed in the first measuring instrument aperture 3a is cleaned when the first measuring instrument aperture 3 is in the maintenance position without removing said first measuring instrument 2a from said first measuring instrument aperture 3a. Thus, the second measuring instrument 2b placed in the second measuring instrument aperture 3b which is in the measuring position can perform measurements from the process. Similarly, the measuring head of the second measuring instrument 2b placed in the second measuring instrument aperture 3b can be cleaned when said measuring instrument aperture 3b is in the maintenance position in accordance with Fig. 4, without having to remove the second measuring instrument 2b from said second measuring instrument aperture 3b. Thus, the measuring instrument 2a advantageously placed in the first measuring instrument aperture 3a can preferably perform measurements from the process at the same time.

Advantageously, the above-described steps are taken also when the connecting device 1 comprises more than two measuring instrument apertures 3. The measuring head of a measuring instrument 2 placed in at least one measuring instrument aperture 3 which is in the maintenance position can be cleaned by means of the flushing channels 8 in the body at the same time when at least one measuring instrument 2 connected to the process continues the measurements from the process. Thus, it is possible to clean the at least one measuring instrument 2 placed in the measuring instrument aperture 3 of the connecting device 1 by using the flushing channels 8 in the body without removing said measuring instrument 2 from the measuring instrument aperture 3. This task can be done without interfering with the measurements made from the process.

According to an advantageous embodiment, the selector member 4 of the connecting device 1 is for the flushing process carried out by means of the flushing channels turned to a position in which the desired measuring instrument aperture 3 and the measuring instruments 2 placed therein are in the maintenance position. Thus, the measuring instrument aperture 3 of the measuring instrument 2 is advantageously connected to at least one inlet channel 8a of the flushing channel 8 in the body. The flow of flushing medium can be controlled by means of a prior art solution, for example by means of valves placed in the connecting device 1 and/or outside the connecting device, which can be controlled for example by means of a separate control system (not shown).

The flushing medium is advantageously conveyed to the measuring instrument aperture 3 via the inlet channel 8a of the flushing channel 8, preferably in such a manner that the measuring head of the measuring instrument 2 placed in the measuring instrument aperture 3 can be cleaned, whereafter said flushing medium is advantageously discharged through the outlet channel 8b of the flushing channel 8 in the body of the connecting device. The measuring head of the measuring instrument 2, such a sensor, is in the above-described flushing process advantageously positioned substantially in connection with said flushing channel 8 in the body when the measuring instrument 2 is located outside the process, i.e. typically when said measuring instrument 2 is positioned in such a measuring instrument aperture 3 which is in the maintenance position. The flushing channels 8 in the body are advantageously positioned so that the measuring head of each measuring instrument 2 extends at least in some position of the measuring instrument aperture 3, advantageously in the maintenance position of the measuring instrument aperture 3, so that it can be cleaned with the flushing medium, such as water from at least one inlet channel 8a of the flushing channel 8 in the body.

There are advantageously at least two inlet channels 8a in the flushing channels 8 of the body. In one exemplary case there are as many inlet channels 8a in the flushing channel of the body as there are measuring instrument apertures 3, as shown in Fig. 4, i.e. if there are for example two measuring instrument apertures 3, there are two inlet channels. Each flushing channel 8 in the body comprises its own inlet channel 8a for the flushing medium. Furthermore, the flushing channel 8 in the body may comprise an outlet channel 8b for the flushing medium. There may be for example one outlet channel 8b for the flushing medium per each inlet channel 8a for the flushing medium. The number of the outlet channels 8b for the flushing medium may also be for example half of the number of the inlet channels 8a for the flushing medium. Often, it is advantageous that there is only one outlet channel 8b for the flushing medium, irrespective of the number of the inlet channels 8a for the flushing medium.

In some advantageous embodiments, there are advantageously at least two, at least three, at least four, at least five or at least six inlet channels 8a for the flushing medium in the connecting device according to the invention. According to an advantageous embodiment, there are as many inlet channels 8a for the flushing medium in the body as there are measuring instrument apertures 3. Advantageously, there is at least one outlet channel 8b in the flushing channel of the body.

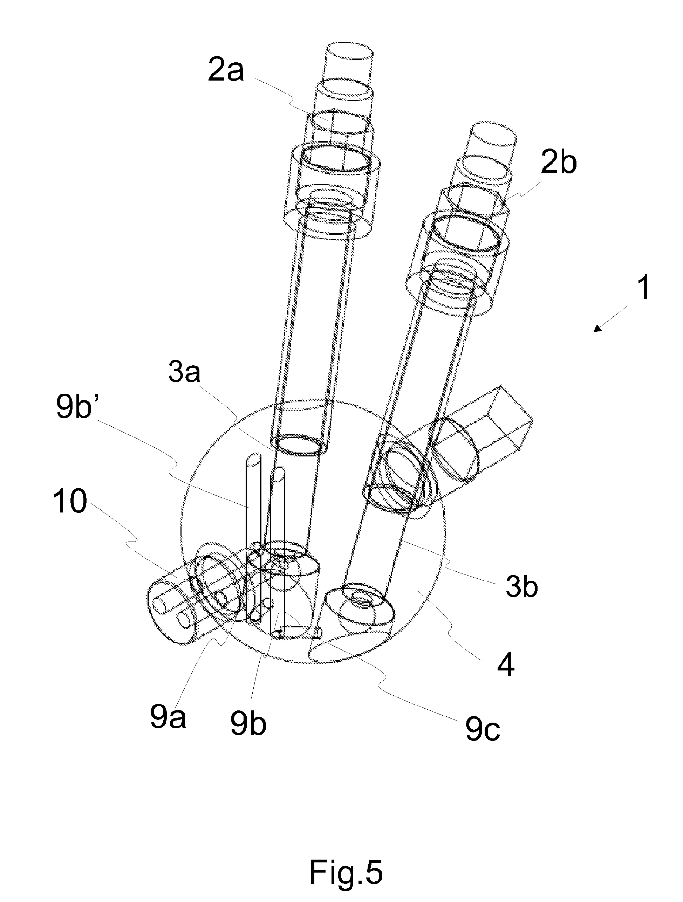

Figs 5 to 7 show some advantageous embodiments for the inner flushing channels of a connecting device, for example of a connecting device as presented above. The figure shows a connecting device 1, a first measuring instrument aperture 3a, a second measuring instrument aperture 3b, a first measuring instrument 2a, a second measuring instrument 2b, a selector member 4, an inner flushing channel 9 of the connecting device, comprising a first part 9a, a second part 9b and a third part 9c of the inner flushing channel, and a shaft 10 of the connecting device.

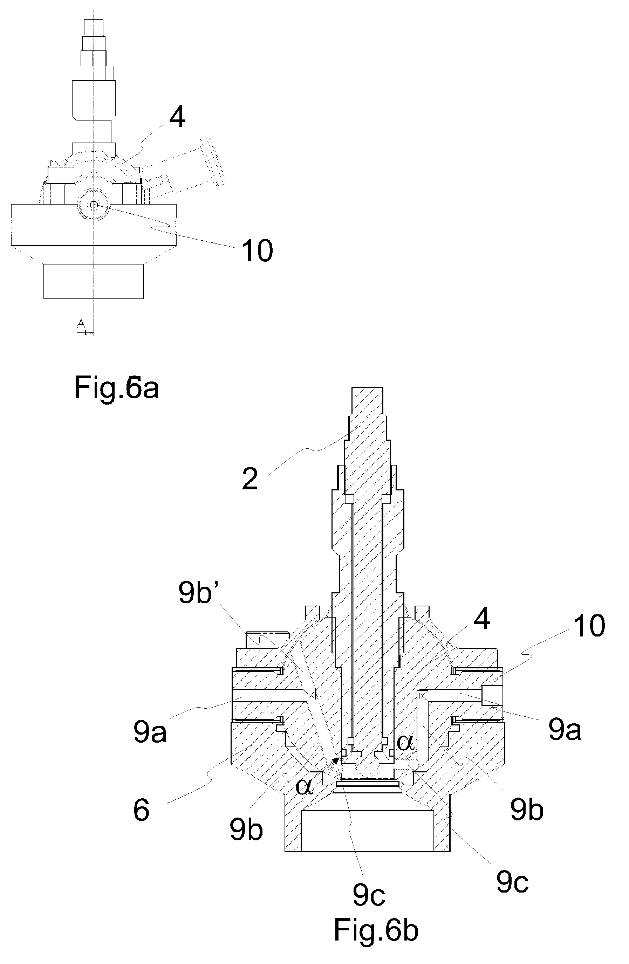

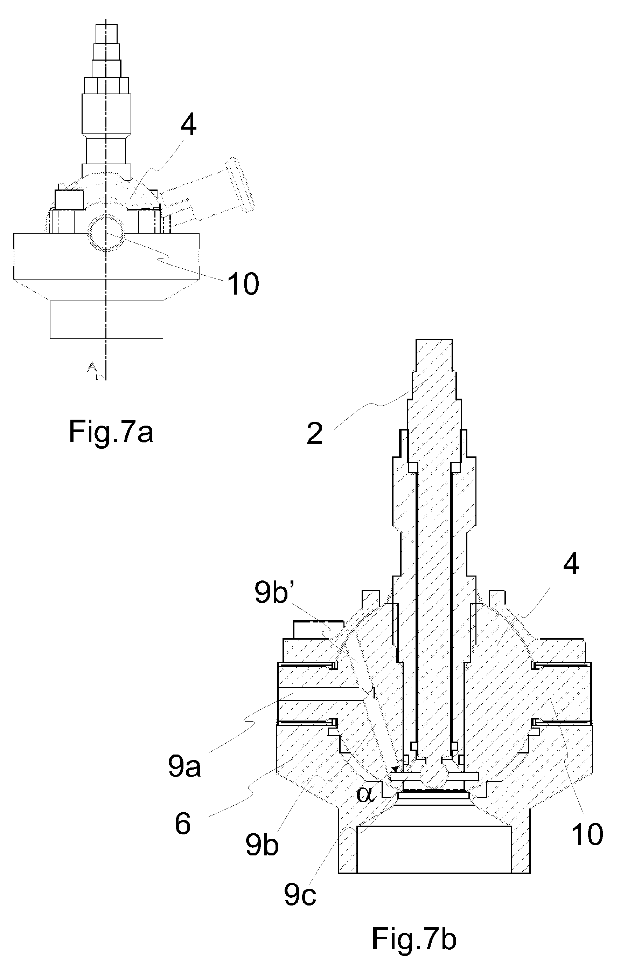

Fig. 5 shows an exemplary embodiment of the inner flushing channel of the connecting device. Figs 6a to 6b show two different exemplary embodiments of the inner flushing channels 9 of the connecting device, in which one alternative is shown on the left-hand side in Fig. 6b and the other on the right-hand side in Fig. 6b. Figs 7a to 7b show an exemplary embodiment of the inner flushing channel 9 of the connecting device, in which the third part 9c of the inner flushing channel is a rotationally symmetrical groove. The inner flushing channel according to each embodiment may be the only inner flushing channel 9 in the connecting device 1. In one connecting device 1 there may also be several inner flushing channels 9 according to the examples, wherein each inner flushing channel 9 may be similar or different in relation to the other inner flushing channels 9.

The inner flushing channels 9 of the connecting device may be used for example in addition to or instead of the flushing channels 8 in the body (shown in Fig. 4). They may also be completely omitted from the connecting device 1. Often the inner flushing channels 9 of the connecting device are advantageously used in addition to the flushing channels 8 of the body. The inner flushing channels 9 of the connecting device are advantageously formed in such a manner that it is possible to advantageously flush the measuring head of the measuring instrument 2 placed in the measuring instrument aperture 3 advantageously at least when said measuring instrument aperture 3 in the measuring position, in other words during the measurements made from the process.

According to an advantageous embodiment, the inner flushing channels of the connecting device 1 comprise at least the following parts: a first part 9a, a second part 9b and a third part 9c of the inner flushing channel. The second part 9b of the inner flushing channel is advantageously located between the first part 9a and the third part 9c of the inner flushing channel. Some of the different parts of the inner flushing channel 9 of the connecting device 1, such as for example the second part 9b and the third part 9c may also be formed of substantially parallel channels, wherein they are not necessarily clearly separate channels. Thus, the angle between the different parts of the channel can be approximately 180 degrees. Thus, it is possible that the inner flushing channels 9 comprise a smaller number of parts than the aforementioned three parts 3a, 3b, 3c. The inner flushing channels 9 of the connecting device 1 may also comprise more than three parts.

According to an advantageous embodiment, there are advantageously as many inner flushing channels 9 of the connecting device 1 as there are measuring instrument apertures 3. Thus, there is a separate inner flushing channel 9 for each measuring instrument aperture 3 of the connecting device 1 and each measuring instrument 2 placed in said measuring instrument aperture 3. It is also possible that there is a smaller number of flushing channels 9 than there are measuring instrument apertures 3.

The inner flushing channels 9 of the connecting device are advantageously placed in accordance to Fig. 5 in such a manner that the flushing medium can be conveyed along the inner flushing channel 9 and via the shaft 10 of the connecting device 1 to the selector member 4. The shaft 10 of the connecting device 1 is advantageously located substantially on the rotational line 5 of the connecting device 1 (shown in Fig. 4a). It is advantageous to arrange the inner flushing channels 9 of the connecting device so that they travel via the shaft 10 to the selector member 4, for example for the reason that because the shaft 10 is advantageously located substantially on the rotational line 5 of the connecting device, it is then possible to control the movement of the inner flushing channels 9 when the selector member 4 moves between its different operating positions.

According to an advantageous embodiment, at least those parts of the inner flushing channels 9 that are positioned at least partly inside the selector member 4 can be formed by providing the selector member 4 with openings. Advantageously, these openings are at least partly made through the outer surface of the selector member 4. These openings that form the inner flushing channels 9 of the selector member 4 can be produced for example by drilling or by another prior art method.

According to an exemplary embodiment, at least one inner flushing channel 9 of the connecting device 1 is positioned in the connecting device 1 in such a manner that the individual channel parts 9a to 9c of the inner flushing channel 9 that are located entirely or partly in the selector member 4 are substantially straight. The parts 9a to 9c of the inner flushing channel 9 are suitably in an angle with respect to each other.

According to an advantageous embodiment, each individual part 9a, 9b, 9c of the inner flushing channel 9a positioned entirely or partly in the selector member 4 is formed through the outer surface of the selector member 4 as shown in Figs 5 to 7. Thus, the possibly formed so-called useless ends of the inner flushing channel must be advantageously closed. For example in the situation of Fig. 5, similarly to other corresponding situations, the end part 9b' of the second part 9b of the inner flushing channel 9 must be preferably closed, so that the flushing medium would be conveyed in the desired manner along the inner flushing channels 9, i.e. most advantageously in the vicinity of the measuring instrument aperture 3. This can be implemented for example so that the second end 9b' of the second part 9b of the inner flushing channel 9 directed towards the outer surface of the selector member 4 is advantageously closed for example in connection with the outer surface of the selector member 4. Alternatively or additionally, said closing may be implemented from the desired at least one point in the area 9b' between the interface of the first part 9a and the second part 9b of the flushing channel 9 and the surface of the selector member 4 of the second part 9b. The closing of the end part 9b' of the second part 9b of the inner flushing channel 9 can be implemented for example by welding or by using closing members, such as plugs. As a result of closing said end part 9b', the flushing medium travels from the first part 9a of the inner flushing channel 9 via the second part 9b to the outlet of the third part 9c, through which the flushing medium travels and advantageously cleans the measuring head of the measuring instrument preferably placed in the measuring instrument aperture 3.

Another advantageous way to form the inner flushing channels is the way in which the inner flushing channel on the right-hand side in Fig. 6b is formed. In this case the second part 9b and the third part 9c of the inner flushing channel 9 can be formed through the outer surface of the selector member 4, for example substantially from the same point of the selector member 4. Thus, it is possible that the structure of the connecting device enables not having to necessarily close the channel parts made advantageously through the surface of the selector member 4 in connection with the surface of the selector member.

On the basis of the same idea (Fig. 6b, the right-hand side), it is possible to form the second part 9b and the third part 9c of the inner flushing channel alternatively also from the same side of the outer surface of the selector member 4, but substantially from different points, so that the second part 9b and the third part 9c of the inner flushing channel 9 intersect inside the selector member. The second end of the second part 9b of the flushing channel and/or the third part 9c of the flushing channel (i.e. the area between the intersection of the channel parts 9b and 9b and the outer surface of the selector member) can thus be closed at the desired point of each channel, for example substantially in the vicinity of the outer surface of the selector member 4. In some cases said second ends of said channel parts may be left open, if the structure of the connecting device allows it.

The third part 9c of the inner flushing channel 9 may also be advantageously implemented as a rotationally symmetrical groove in accordance with figures 6a to 6b.

If there is more than one inner flushing channel 9 in the connecting device, each inner flushing channel 9 may be substantially similar or the ways in which the inner flushing channels are implemented may vary from each other.

According to an advantageous embodiment, the second part 9b and the third part 9c of the inner flushing channel 9 that are at least partly positioned in the selector member 4 form an angle α between them, in the cross-sectional view A-A of the connecting device (the cross-section shown in Figs 6a and 7a). Said angle is advantageously at least 50°, at least 60°, at least 70°, at least 80°, at least 90°, at least 100°, or at least 110° Often the angle α is preferably 60 ° to 140 °, 80 ° to 130 ° or 100 ° to 120°.

According to one embodiment, a lateral shift is arranged in the inner flushing channels 9 in addition to or instead of said angle α. In this application the concept of lateral shift means that the second part 9b of the flushing channel 9 is positioned at least slightly in a different line with respect to the third part 9c of the flushing channel 9. The lateral shift is preferably 0, 0.3, 0.5, 0.8, 1, 1.5, 2, 2.5 or 3 times the size of the diameter of the second part 9b of the inner flushing channel 9, the set of numbers containing all the intervals and subintervals inside these numerical values. In practice, such lateral shift generates two angles in the inner flushing channel 9, both of which are typically substantially at right angles. Such placement of the inner flushing channels 9 may be useful in view of the rinsing result of the measuring head of the measuring instrument 2 placed in the measuring instrument aperture 3.

According to an advantageous embodiment, the inner flushing channels 9 of the connecting device 1 comprise both said angle α and said lateral shift in said intersection of the second part 9b and the third part 9c, i.e. preferably in the last corner of the inner flushing channels 9. The third part 9c of the inner flushing channel 9 is preferably positioned in such a manner that the inner flushing channel 9 ends to the measuring instrument aperture 3. According to another advantageous embodiment the inner flushing channels of the connecting device comprise either said angle or said lateral shift at said point.

According to an advantageous embodiment at least one inner flushing channel 9 of the connecting device 1 is positioned in such a manner that flushing medium can be conveyed via the selector member 4 to the measuring instrument aperture 3, preferably towards the measuring head of the measuring instrument 2 placed in the measuring instrument aperture 3. This way the measuring head of the measuring instrument 2 can be cleaned when desired, for example when said measuring instrument aperture 3 is in the measuring position. When the flushing medium is conveyed in the way described above, i.e. along at least one inner flushing channel 9 via the selector member 4 in connection to the measuring instrument aperture 3, preferably to the measuring instrument 2 located in the measuring instrument aperture 3, advantages are attained for example in that respect that it may be possible to remove the process substance, for example paper pulp, which possibly may have accumulated in the measuring head of the measuring instrument 2 for example during stoppage or some other situation and which may have high dry matter content, from the measuring head of the measuring instrument 2 by means of the inner flushing channels 9 of the connecting device 1 for example as a result of the flow effect and/or pressure effect of the flushing medium. The solution is especially advantageous, if the measuring head of the measuring instrument 2 is located at least partly in the measuring instrument aperture 3 of the selector member 4. If flushing medium would be conveyed for example only through the body 6 of the connecting device 1 substantially outside the connecting device, it could be especially difficult to remove the process substance possibly accumulated in the measuring head 2 of the measuring instrument, or other, especially viscous medium, from outside the measuring instrument aperture 3.

The inner flushing channels 9 of the connecting device 1 according to the invention and the flushing channels 8 in the body of the connecting device can also be formed in ways deviating from that disclosed above, or one or both of them can be completely omitted from the connecting device 1 according to the invention.

The invention is not limited solely to the examples presented in Figs. 1 to 7 and in the above description, but the invention is characterized in what will be presented in the following claims.

## Claims

1. A connecting device for measuring instruments comprising
- a body (6),
- a selector member (4) which is arranged to move in relation to the body (6) and which rotates in relation to its rotational line (5) at least to a first and to a second position, which first and second position comprise a measuring position for process measurements and a maintenance position, and
- a measuring instrument aperture (3) positioned at least partly in connection with the selector member 4,
**characterized in that** the connecting device also comprises a second measuring instrument aperture (3) positioned at least partly in connection with said selector member (4), and that the connecting device is constructed in such a manner that at least one measuring instrument aperture (3a) is in the measuring position at the same time when at least one other measuring instrument aperture (3b) is in the maintenance position.

2. The connecting device according to claim 1, **characterized in that** a shaft (10) is formed in connection with the selector member (4), which is positioned substantially on the rotational line (5) of the selector member (4).

3. The connecting device according to any of the preceding claims, **characterized in that** the selector member (4) has a spherical, hemispherical or cylindrical shape.

4. The connecting device according to any of the preceding claims, **characterized in that** the connecting device (1) comprises flushing channels (8) in the body of the connecting device (1), located at least partly in connection with the body (6) of the connecting device and intended for cleaning the measuring head of the measuring instrument (2) to be placed in the measuring instrument aperture (3) when said measuring instrument aperture (3) is in the maintenance position.

5. The connecting device according to claim 4, **characterized in that** the flushing channel (8) of the body comprises an inlet channel (8a) for the flushing channel of the body and an outlet channel (8b) for the flushing channel of the body, and that flushing medium is arranged to be conveyed via the inlet channel (8a) to the connecting device and that the flushing medium is arranged to be discharged from the connecting device via the outlet channel (8b).

6. The connecting device according to any of the preceding claims 4 to 5, **characterized in that** in the connecting device (1) there are at least two inlet channels (8a) in the flushing channel (8) in the body of the connecting device (1), and that in the connecting device (1) there is at least one outlet channel (8b) in the flushing channel (8) in the body of the connecting device (1).

7. The connecting device according to any of the preceding claims, **characterized in that** the connecting device (1) comprises at least one inner flushing channel (9) of the connecting device, positioned at least partly in the selector member (4) of the connecting device (1).

8. The connecting device according to claim 7, **characterized in that** at least one inner flushing channel (9) of the connecting device comprises at least a first part (9a), a second part (9b) and a third part (9c) and the first part of the inner flushing channel (9) of the connecting device (1) is positioned at least partly in connection with the axial line (10) of the connecting device and that the second and/or third part (9b, 9c) of the connecting device is/are positioned at least partly in the selector member (4).

9. The connecting device according to claim 7 or 8, **characterized in that** the inner flushing (9) of the connecting device (1) is positioned in such a manner that it is possible to convey flushing medium therethrough via the selector member (4) to at least one measuring instrument aperture (3).
